(19) Europäisches Patentamt
European Patent Office
Office européen des brevets

(11) **EP 4 738 765 A1**

(12) **EUROPEAN PATENT APPLICATION**

(43) Date of publication:
**06.05.2026 Bulletin 2026/19**

(21) Application number: **24210217.6**

(22) Date of filing: **31.10.2024**

(51) International Patent Classification (IPC):
*H04L 9/40* (2022.01)     *H04L 9/00* (2022.01)
*H04L 9/08* (2006.01)

(52) Cooperative Patent Classification (CPC):
**H04L 63/0442; H04L 9/004; H04L 9/0825; H04L 63/062**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **SCHNEIDER, Tobias**
**8010 Graz (AT)**
• **BRONCHAIN, Olivier**
**1169 Brussels (BE)**
• **AZOUAOUI, Melissa**
**22529 Hamburg (DE)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire SO51 9NJ (GB)**

(54) **A LIGHTWEIGHT FAULT COUNTERMEASURE FOR POST-QUANTUM KEMS**

(57)    A method is proposed to improve the resistance to fault attacks.

Fig. 1

**Description**

**FIELD**

The invention relates to a method and system. Particularly, but not exclusively, the invention relates to a computer-implemented method and system. Particularly, but not exclusively, the invention relates to a computer-implemented method of processing a ciphertext to extract data from the ciphertext. Particularly, but not exclusively, the invention relates to a lightweight fault countermeasure for post quantum key encapsulation mechanisms.

**BACKGROUND**

Key encapsulation mechanisms (KEM) are widely used approaches to transmitting data (e.g. keys) between parties and are particularly popular when it comes to transmitting data which needs to be secure from access by unauthorised third parties.

Key encapsulation mechanisms (KEM) approaches are vulnerable to various types of attack as malicious third parties seek to access the data which is being transmitted between parties.

Example attacks include chosen-ciphertext fault attacks and chosen-ciphertext detection-assisted fault attacks which attack the decapsulation of the data which is encrypted within ciphertexts. It is important that approaches are developed to resist these attacks, especially in view of the processing restrictions on embedded computing devices.

Recent significant advances in quantum computing have accelerated the research into post-quantum cryptography schemes, i.e. cryptographic algorithms which run on classical computers but which are still secure even when faced with an adversary with a quantum computer.

Aspects and embodiments were conceived with the foregoing in mind.

**SUMMARY**

Aspects relate to the identification and correction of errors during the execution of a KEM ciphertext decapsulation. Aspects may be used alongside key encapsulation and decapsulation methods, for example module-lattice based key encapsulation methods (ML-KEM) to identify faults which may be generated by a malicious entity.

Viewed from a first aspect, there is provided a computer-implemented method of processing a ciphertext. The method may be to identify and correct errors in the provided ciphertext. The error may have been injected during ciphertext decapsulation. A ciphertext may be understood to mean encrypted data which is unreadable and which can only be deciphered using a key. It may be as a result of using an encryption algorithm to transform plain text (or secret data such as, for example, an encryption key) into a series of random letters and numbers. The method may be used to extract data from the ciphertext. The ciphertext may encapsulate data in accordance with a key encapsulation mechanism such as, for example, module lattice key encapsulation mechanism (ML-KEM). By extracting the data, we may mean reversing the effect of the encryption of the encrypted data to obtain the data which is intended to be unreadable to entities other than those who have the appropriate key. An example of such data may be an encryption key. The method may be implemented by a processing resource. The processing resource may be hardware or software implemented. The processing resource may be hosted within a secure computing environment. An example of such an environment may be a trusted execution environment. The processing resource may be any resource which can provide processing capacity. The method may comprise receiving a first ciphertext encrypting data to be extracted. The ciphertext may be received over a telecommunications network such as, for example, the world-wide web or any other suitable data transmission protocol or media. The method may comprise decrypting the first ciphertext to extract the data from the first ciphertext using a secret key to produce decrypted ciphertext data. The secret key may be described as a private key. The secret key may be obtained from storage. The secret key may be generated by the processing resource using any suitable approach such as, for example, asymmetric cryptography. The method may comprise re-encrypting the decrypted ciphertext data using a public key to produce an encrypted data set. The public key may be related to the secret key using asymmetric cryptography. The public key may be obtained from storage. The method may comprise identifying and correcting at least one error in the decapsulation of a first ciphertext based on the encrypted data set and data associated with an invalid ciphertext which is suitable for a fault attack. An invalid ciphertext is a ciphertext which is chosen because it has already been identified as being associated with a fault attack. On identification of the at least one error in the decapsulation of a first ciphertext, the processing resource may correct the error.. The error may be the result of a malicious entity who is perpetrating a fault attack. The decapsulation, if it is identified to contain an error, and subsequently corrected, can then no longer be used by the malicious entity as the error has already been corrected by the operator of the processing resource.

By determining the likelihood we may mean obtaining data inputs which relate to a decision about how the encrypted data matches the received ciphertext and inferring that they are the same or not using, for example, a majority function. The data associated with the invalid ciphertext may be an input to the majority function.

A method in accordance with the first aspect enables errors to be identified and corrected in the decapsulation of a received ciphertext requires the data about the invalid ciphertext and it also requires knowledge of the re-encryption process, which may contain layers of redundancy which are also used to determine whether the encrypted data matches the received ciphertext. By identifying and correcting errors in the decapsulation of a received ciphertext, the decapsulation cannot be used by a malicious entity again as the error has been corrected.

The data to be extracted is associated with an encryption key which may be encapsulated within the ciphertext in accordance with a KEM method. The encryption key may be an alphanumeric sequence which is encrypted within the ciphertext using an encryption algorithm. The data may alternatively be a message or a plaintext or a secret value from which a symmetric encryption key is derived using a key derivation function.

The re-encryption of the decrypted ciphertext data using a public key may comprise re-encrypting the decrypted ciphertext data using a first processing entity to produce a first re-encryption output. This may utilise a first public key which may be related to the secret key using asymmetric cryptography. The method may further comprise re-encrypting the decrypted ciphertext data using a second processing entity (which may be distinct from the first processing entity) to produce a second re-encryption output. This may utilise a second public key which may be related to the secret key using asymmetric cryptography. The second public key may be identical to the first public key.

The effect of this is that the re-encryption is executed using two distinct processing entities, which may be in different locations. This means that both would need to be accessed to influence the identification of the fault. If it is desired to identify more than a single fault, more re-encryptions could be executed using further public keys which may identical to the first public key.

The first and second re-encryption outputs may be generated as a result of a comparison between re-encryption of the decrypted ciphertext data and the received ciphertext data.

Identifying and correcting an error in the decapsulation of a provided ciphertext may comprise providing first data associated with the first re-encryption output and second data associated with the second re-encryption output to a majority function. Identifying and correcting an error in the decapsulation of a provided ciphertext may comprise providing the data associated with an invalid ciphertext to the majority function. Identifying and correcting an error in the decapsulation of a provided ciphertext may be based on the output of the majority function.

The majority function may be defined as:

$$D_E = (b' \ AND \ b'') \ XOR \ (b' \ AND \ b''') \ XOR \ (b'' \ AND \ b''')$$

where b' is the first data associated with the first re-encryption output, b" is the second data associated with the second re-encryption output and b''' is the data associated with an invalid ciphertext and $D_E$ is error corrected output.

The data associated with the invalid ciphertext may comprise decision data associated with the validity or invalidity of the invalid ciphertext. In other words, the data associated with the invalid ciphertext may indicate it is a valid ciphertext, i.e. a ciphertext which is not suitable for use in a fault attack, or indicate it is an invalid ciphertext, i.e. a ciphertext which is suitable for use in a fault attack.

The first data associated with the first re-encryption output and the second data associated with the second re-encryption output may be binary outputs. The decision data which may be associated with the validity or invalidity of the invalid ciphertext is a binary output.

The decision data related to the invalid ciphertext may be preset by the processing resource. This reduces the computational expense of the process of identifying and correcting faults in the decapsulation of a ciphertext as it does not require a re-encryption or a comparison operation.

The data associated with the invalid ciphertext may be associated with a previously successful fault attack.

The processing resource may be a secure computing resource which may be a trusted execution environment.

Viewed from a second aspect, there is provided a computer-implemented method of accessing data encrypted by a ciphertext, the method comprising processing a ciphertext in accordance with the first aspect to correct or extract a determination about an error in a provided ciphertext or determine the presence of at least one fault attac. The detection and/or correction may be performed subsequent to a Fujisaki-Okamoto (FO) transformation used to decapsulate a received ciphertext. The determination of the error may be used to identify a fault attack using the received ciphertext. The method may further comprise obtaining the data encrypted by the ciphertext based on the correction of the error.. Non-transitory computer readable storage media, systems and processing resources may also be provided which are configured to provide a method in accordance with the first aspect.

**DESCRIPTION**

An embodiment will now be described by way of example only and with reference to the following drawings in which:

Figure 1 illustrates a series of steps to be used in the processing of a ciphertext to extract data from a ciphertext;

Figure 2 illustrates a processing resource which may be used to implement the processing of a ciphertext to extract data;

Figure 3 illustrates a diagram of a ciphertext processing system which can be used to implement the processing of a ciphertext to extract data.

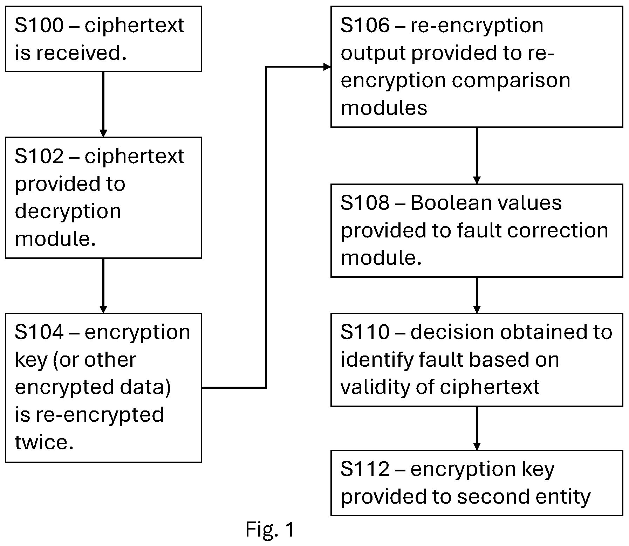

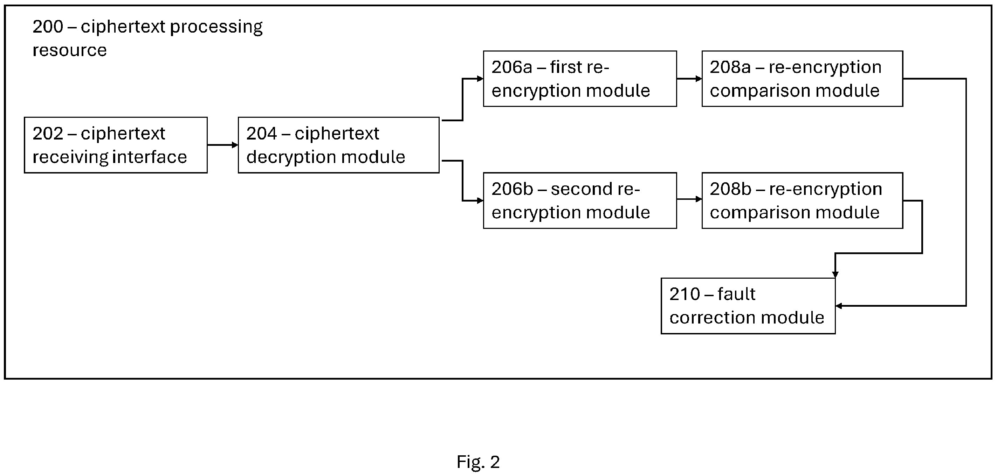

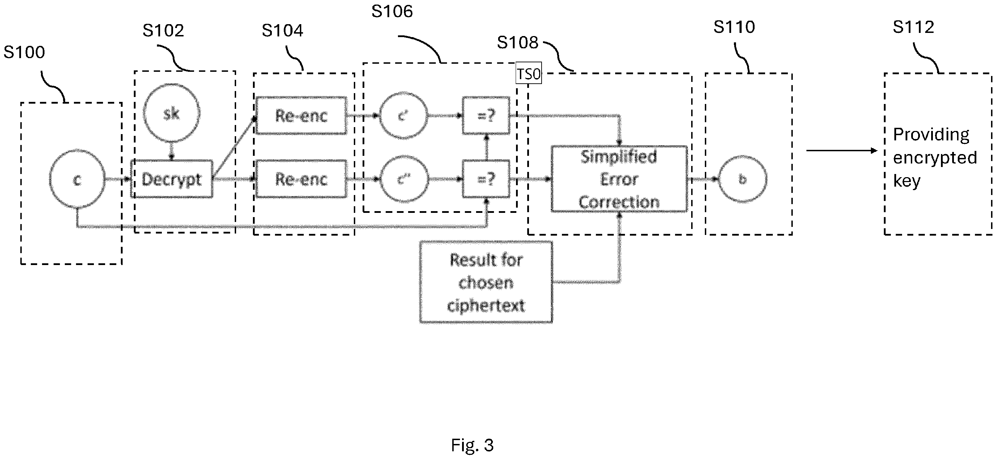

We now illustrate, with reference to Figures 1 to 3, how a ciphertext may be processed using a ciphertext processing resource 200 to extract an encryption key which is encapsulated within the ciphertext. Whilst we use the example of an encryption key, it is only intended to be an example of data which may need to be extracted from a ciphertext received by the ciphertext processing resource 200 and is not intended to be limiting. The data may alternatively be a message or a plaintext or a secret value from which a symmetric encryption key is derived using a key derivation function. Figure 3 shows a block diagram of how a system in accordance with the embodiment may be set-up. It is shown with the aligned steps of the method illustrated in Figure 1.

Such an encryption key may be transmitted from a first entity (who generates the ciphertext in order to encrypt the encryption key) to the second entity who may wish to use the encryption key. The second entity may be associated with ciphertext processing resource 200. Ciphertext processing resource may be configured to access a secret key (sk) which can be used to decrypt ciphertexts provided by the first entity. Further encryption may be implemented using a public key (pk). The secret key and the public key may be related using asymmetric cryptography techniques. The encryption key may be encapsulated in the ciphertext in accordance with a key encapsulation mechanism (KEM) and transmitted to the second entity with the intent for them to decapsulate the encryption key from the received ciphertext.

Ciphertext processing resource 200 comprises a ciphertext receiving interface, a ciphertext decryption module 204, first re-encryption module 206a, second re-encryption module 206b, first re-encryption comparison module 208a, second re-encryption module 208b and fault correction module 210. Each of the ciphertext receiving interface, the ciphertext decryption module 204, the first re-encryption module 206a, the second re-encryption module 206b, the first re-encryption comparison module 208a, the second re-encryption module 208b and the fault correction module 210 are configured to access local or remote storage where data or routines necessary for their operation may be stored. Each of the ciphertext receiving interface, the ciphertext decryption module 204, the first re-encryption module 206a, the second re-encryption module 206b, the first re-encryption comparison module 208a, the second re-encryption module 208b and the fault correction module 210 may be configured to transmit data between one another using any suitable data transmission media and/or protocol. Each of the re-encryption comparison modules may be located remotely relative to one another.

In a step S100, a ciphertext (C) is received at the ciphertext receiving interface 202 within ciphertext processing resource 200. The ciphertext is sent to the ciphertext receiving interface 202 by a party wishing to provide an entity associated with the ciphertext processing resource with the encryption key. The ciphertext encrypts the encryption key using any suitable approach, i.e. using a Fujisaki-Okamoto (FO) transform or any other suitable approach. The encryption key may have been generated by the party providing the ciphertext. The ciphertext may be received as part of a message which includes the ciphertext. The ciphertext may itself be encrypted and require decryption by the ciphertext receiving interface to extract the ciphertext, i.e. there may be additional (i.e. one or more) layers of encryption which need to be processed before the ciphertext itself can be accessed.

In a step S102, the ciphertext receiving interface 202 provides the ciphertext to the ciphertext decryption module 204 with a request for it to be decrypted. The ciphertext decryption module 204 accesses a secret key and uses the secret key to decrypt the ciphertext. The secret key may have been previously provided by the party who transmitted the ciphertext to the ciphertext receiving interface 202. The secret key may be otherwise described as a private key. The secret key may be obtained from storage which is local to the ciphertext decryption module 204 or it may be obtained from storage which is remote relative to the ciphertext decryption module 204. Local storage may be located at the ciphertext processing resource 200. Remote storage may be located at a location distinct from the ciphertext processing resource 200. The storage where the secret key is stored may be secure storage and may require multi-factor authentication to access the secret key. On decryption of the ciphertext, the encryption key or other encrypted data is obtained.

In a step S104, the encryption key (or whichever data has been extracted by the decryption module 204) is re-encrypted twice by the respective first and second re-encryption modules (respectively enumerated as 206a and 206b). Each of the re-encryptions utilises a public key (the same public key for both) corresponding to the secret key used to decrypt the ciphertext. The public keys used for the re-encryptions may well be the same or they may be distinct from one another. The public key(s) and the secret key may be related using asymmetric cryptography.

The re-encryption modules can be the same software running on the same hardware but with two distinct executions. The re-encryption modules may also utilise two separate processing resources or entities.

The respective first and second re-encryption modules may be located in distinct locations. The respective first and second re-encryption modules may comprise two distinct computing entities each configured to execute the re-encryption operation using a public key. The public key may be obtained from local or remote storage. The storage may be secure.

The respective re-encryptions using the first and second re-encryption modules 206a and 206b produce a respective first and second re-encryption output which comprises the data obtained from the re-encryption of the encryption key.

In a step S106, the re-encryption outputs are provided to respective re-encryption comparison modules 208a and 208b. The re-encryption comparison modules 208a and 208b compare the respective first and second re-encryption output with the received ciphertext to generate a Boolean value to indicate whether the re-encryption output is the same as the ciphertext or not. In this example, if the re-encryption output is the same as the ciphertext then the Boolean value is 1. Naturally, if the re-encryption output is not the same as the encryption key, then the Boolean value is 0, which indicates an invalid ciphertext has been provided.

In a step S108, the respective first and second Boolean values are both provided to the fault correction module 210. The fault correction module implements a majority function which is described below:

$$D_E = b'.b'' + b'.b''' + b''.b'''$$

where $D_E$ is the corrected output, b' is the first Boolean value (i.e. representative of the first comparison following the first re-encryption) and b" is the second Boolean value (i.e. representative of the second comparison following the second re-encryption). Expressed in terms of Boolean operations, the equation to determine $D_E$ can be expressed as:

$$D_E = (b' \, AND \, b'') \, OR \, (b' \, AND \, b''') \, OR \, (b'' \, AND \, b''')$$

If Boolean masking is applied to the values b', b" and b''' then the above equation can be reduced to:

$$D_E = (b' \, AND \, b'') \, XOR \, (b' \, AND \, b''') \, XOR \, (b'' \, AND \, b''')$$

If Boolean masking is used, the logical XOR operation is computationally more efficient than the logical OR operation.

The value for b''' represents input associated with an invalid ciphertext (distinct from the one which is received in step S100). The invalid ciphertext may be one which could be used for a fault attack. In order to construct such a ciphertext, a valid ciphertext, i.e. one which may have been successfully decrypted (without detection of a fault) in the past, may be obtained and then part of the ciphertext modified, e.g. one of the bits may be flipped. The input may be represented by a third Boolean value (i.e. b''' may be a 0 or 1) and whichever b''' is set to, as set out below, this simplifies the calculation of the decision. Such a modification would make the valid ciphertext an invalid ciphertext. The invalid ciphertext may be one which has been previously identified, using the Fujisaki Okamoto transform, as having an error.

In a step S110, the third Boolean value, i.e. that which represents b''' is provided to the fault correction module 210 as a third input to the majority function in order to obtain $D_E$, i.e. a corrected output value. Whichever approach is used to encode b''', the computational expense associated with calculating $D_E$ is reduced. The output may be expressed rather more simply as a bit b. Put simply, by providing the third Boolean value based on a ciphertext rather than a third re-encryption, the computation of the decision is simplified and the necessary computational resources are reduced.

If we consider an equivalent approach to what is used to calculate b' and b", then we can simplify $D_E$ using simple rules around Boolean algebra as set out below:

If b''' = 0, then $D_E$ = b'. b" (or b' AND b") and so would simplify the calculation of the output where b''' = 0 represents the ciphertext. If b''' = 1, then $D_E$ = b' OR b" and so would simplify the calculation of the output where b''' = 1 represents the invalid ciphertext.

In summary, the equations for $D_E$ are simplified as the values for b''' are known a priori. This is the case whether b''' = 0 represents an invalid ciphertext or not, i.e. even in the case b''' = 1 represents the invalid ciphertext and b'''=0 represents the valid ciphertext. In the event that b'''=0 the truth table for the calculation of $D_E$ becomes:

| b' | b" | $D_E$ |
|----|----|-------|
| 0  | 0  | 0     |
| 1  | 0  | 0     |
| 0  | 1  | 0     |

(continued)

| b' | b" | $D_E$ |
|----|----|----|
| 1 | 1 | 1 |

That is to say, if b''' = 0 represents an invalid ciphertext then any value of b' or b" (which indicates an invalid ciphertext) will identify an error (i.e., identify an invalid ciphertext provided in step S100 if consistent encoding is used). In the event that b''' = 1 the truth table for the calculation of $D_E$ becomes:

| b' | b" | $D_E$ |
|----|----|----|
| 0 | 0 | 0 |
| 1 | 0 | 1 |
| 0 | 1 | 1 |
| 1 | 1 | 1 |

That is to say, if b''' = 1 represents an invalid ciphertext then any value of b' or b" which indicates an invalid ciphertext will identify an error (i.e. identify an invalid ciphertext provided in step S100 if consistent encoding is used).

The truth tables above indicate that for invalid ciphertexts (e.g. those provided for a fault attack) we would always get an output of $D_E$ = 0 (if b'''=0 for an invalidciphertext)

Even if we use b'''=1 for an invalidciphertext then $D_E$ = 1 if an invalid ciphertext is provided (assuming consistent encoding between b''' and the encoding of the re-encryption comparison modules (208a and 208b)).

Additionally, if a valid ciphertext is used and encoded as b'''=1, then $D_E$ = 1 if b'=1 and b"=1 (also assuming consistent encoding).

The equations for $D_E$ derived above show that the calculation around the correction of an error is substantially simplified by the use of data representing an invalid or valid ciphertext rather than performing a third re-encryption and comparison before performing a third Boolean operation. In other words, the necessity for the third Boolean operation is removed as the value for the invalid or valid ciphertext is already known and can be used to simplify the calculation of the decision. The value for the invalid or valid ciphertext can be retrieved from storage by the fault correction module.

In summary, we calculate $D_E$ based on the result of the first and second comparisons between the received ciphertext and the re-encryption and data relating to an invalidciphertext. The value of $D_E$ indicates whether the received ciphertext (i.e. the first ciphertext received in step S100) represents an invalid ciphertext, even under the presence of at least one injected fault during the re-encryption modules..

Any of the Boolean operations described above may be executed using appropriate hardware. The hardware may be secure hardware. Masking, such as Boolean masking, may be applied to the Boolean operations. The calculation of $D_E$ may be calculated using an appropriately configured arithmetic circuit comprising combinations of one or more AND, XOR and OR logical gates.

If we want to configure the processing resource 200 to handle more than a single fault, i.e. two or more faults, processing resource 200 can be scaled up by adding further re-encryptions and modifying $D_E$ accordingly. That is, representing $D_E$ using the majority function for n inputs and setting one of the inputs to the known result for an invalid ciphertext. For example, the identification of two faults would require 3 re-encryptions and one input which represents the known result for an invalid ciphertext.

The steps described above can be used to correct one fault during the decapsulation of a received ciphertext. The one error may be the result of a fault attack..

The error may be identified by comparing the re-encrypted ciphertext which did not return any indication of an error with the re-encrypted ciphertext which did return an indication of an error to identify the erroneous bit and then that bit may be flipped back to its original value (i.e. if the erroneous bit was a 0 then it can be flipped to a 1 and vice versa). This correction can be performed by the fault correction module 210 before the decrypted ciphertext (including any identified correction) is provided to an entity to whom the data is being sent, i.e. the data which is encrypted by the ciphertext.

The error may be corrected without raising any alarm or providing any signal which is different to what is provided usually. This means that a signal indicating a correction is needed cannot provide information to a malicious entity who is seeking to perform a fault attack such as a chosen ciphertext fault attack or a chosen ciphertext detection assisted fault attack.

If the ciphertext is identified as being an invalid ciphertext, i.e. if at least one error is identified in the ciphertext received in step S100 (by the subsequent steps S102 to S110), then that ciphertext may be retained in storage by the processing resource and used in future fault identification as a ciphertext which has been used in a fault attack. That is to say, a received invalid ciphertext can be stored for use later on as an invalid ciphertext.

If a fault or error is not identified in the received ciphertext in steps S100 to S110, then access to the encryption key can be provided to the second entity in step S112. If a fault or error is identified, then the access to the encryption key be provided in step S112 after correction of the error.

Fault identification and correction using the processing resource 200 provides fault resistance which is more computationally efficient than prior art solutions and provides additional security benefits in that, in order to overcome the fault resistance of the processing resource 200, a malicious third party would need to infiltrate both re-encryption modules to influence the decision which is generated by the re-encryption.

Additionally, by removing a third re-encryption (relative to, say, Triple Computation) the computational resources required to identify a single fault is reduced.

Specifically, methods in accordance with the embodiment may be used as a countermeasure against chosen ciphertext fault attacks and chosen-ciphertext detection assisted fault attacks.

The method may act as a countermeasure against chosen ciphertext fault attacks by requiring the attacker to infiltrate both re-encryptions before the comparison step in order to influence the decision about an invalid ciphertext. That is, an invalid ciphertext which is provided to the ciphertext receiving interface 202 will be identified as invalid unless the comparison step can be infiltrated.

Similarly, it also acts as a countermeasure against chosen-ciphertext detection assisted fault attacks by requiring both re-encryptions to be infiltrated in order to influence the comparison step and the resulting decision about the fault.

In more general terms, the described approach provides error correction for KEM (e.g. ML KEM) by utilising a-priori knowledge about the outcome of a previous Fujisaki Okamoto (FO) transform for a chosen ciphertext, i.e. where a received ciphertext is shown to be invalid. Using such a ciphertext, we only need to recompute the re-encryption once. The strategic positioning of the error correction at the end of the FO transform minimises the impact on the memory and simplifies the required correction circuit. This enables our error correction calculation to be simplified down to a single Boolean operation.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method of processing a ciphertext to extract data from the ciphertext, the method implemented by a processing resource, the method comprising:

   receiving a first ciphertext encrypting data to be extracted;
   decrypting the first ciphertext to extract the data from the first ciphertext using a secret key to produce decrypted ciphertext data;
   re-encrypting the decrypted ciphertext data using a public key to produce an encrypted data set;
   determining and correcting the presence of at least one error in the decapsulation of the received ciphertext based on the encrypted data set and data associated with an invalid ciphertext.

2. A method according to Claim 1, wherein the data to be extracted is associated with an encryption key.

3. A method according to Claim 1, wherein the re-encryption of the decrypted ciphertext data using a public key comprises:

   re-encrypting the decrypted ciphertext data using a first processing entity to produce a first re-encryption output; and
   re-encrypting the decrypted ciphertext data using a second processing entity to produce a second re-encryption output.

**4.** A method according to Claim 3, wherein the first processing entity and the second processing entity are distinct.

**5.** A method according to Claim 3 or Claim 4, wherein the first and second re-encryption outputs are generated as a result of a comparison between re-encryption of the decrypted ciphertext data and the received ciphertext data.

**6.** A method according to Claim 3 wherein identifying and correcting an error in the decapsulation of a provided ciphertext comprises:

providing first data associated with the first re-encryption output and second data associated with the second re-encryption output to a majority function; and
providing the data associated with an invalidciphertext to the majority function; and
identifying and correcting an error of a fault attack based on the output of the majority function.

**7.** A method according to any preceding claims, wherein the majority function is:

$$D_E = (b' \ AND \ b'') \ XOR \ (b' \ AND \ b''') \ XOR \ (b'' AND \ b''')$$

where b' is the first data associated with the first re-encryption output, b" is the second data associated with the second re-encryption output and b''' is the data associated with an invalid ciphertext and $D_E$ is corrected output.

**8.** A method according to any preceding claims, wherein the data associated with the invalid ciphertext comprises decision data associated with the validity or invalidity of the invalid ciphertext.

**9.** A method according to any preceding claims wherein the data associated with the invalid ciphertext is associated with a previously successful fault attack.

**10.** A method according to any preceding claims wherein the processing resource is a secure computing resource.

**11.** A method according to any preceding claims, wherein the method further comprises:
providing a corrected output indicating whether the provided first ciphertext is associated with a fault attack.

**12.** A computer-implemented method of accessing data encrypted by a ciphertext, the method comprising:

processing a ciphertext in accordance with the method of any one of claims 1 to 11 to extract a determination about the presence of at least one fault attack;
obtaining the data encrypted by the ciphertext based on the determination of the presence of at least one fault attack.

**13.** A non-transitory computer readable storage medium having stored thereon executable instructions that, as a result of being executed by a processor of a computer system, cause the computer system to at least perform the method of any one of any preceding claims.

**14.** A system configured to implement the method of any preceding claims.

**15.** A processing resource comprising a processor and memory including executable instructions that, as a result of execution by the processor, causes the reader to perform the method of any preceding claims.

EP 4 738 765 A1

```
┌─────────────────────┐                              ┌─────────────────────────┐
│ S100 – ciphertext   │                              │ S106 – re-encryption    │
│ is received.        │                              │ output provided to re-  │
└─────────────────────┘                              │ encryption comparison   │
          │                                          │ modules                 │
          ▼                                          └─────────────────────────┘
┌─────────────────────┐                                         │
│ S102 – ciphertext   │                                         ▼
│ provided to         │                              ┌─────────────────────────┐
│ decryption          │                              │ S108 – Boolean values   │
│ module.             │                              │ provided to fault       │
└─────────────────────┘                              │ correction module.      │
          │                                          └─────────────────────────┘
          ▼                                                     │
┌─────────────────────┐                                         ▼
│ S104 – encryption   │                              ┌─────────────────────────┐
│ key (or other       │                              │ S110 – decision         │
│ encrypted data)     │──────────────────────────────│ obtained to identify    │
│ is re-encrypted     │                              │ fault based on          │
│ twice.              │                              │ validity of ciphertext  │
└─────────────────────┘                              └─────────────────────────┘
                                                                │
                                                                ▼
                                                     ┌─────────────────────────┐
                                                     │ S112 – encryption key   │
                                                     │ provided to second      │
                                                     │ entity                  │
                                                     └─────────────────────────┘
```

Fig. 1

200 – ciphertext processing resource

202 – ciphertext receiving interface

204 – ciphertext decryption module

206a – first re-encryption module

208a – re-encryption comparison module

206b – second re-encryption module

208b – re-encryption comparison module

210 – fault correction module

Fig. 2

EP 4 738 765 A1

Fig. 3

## EUROPEAN SEARCH REPORT

**Application Number**

EP 24 21 0217

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 436 092 A1 (GIESECKE DEVRIENT MOBILE SECURITY GERMANY GMBH [DE]) 25 September 2024 (2024-09-25) | 1-5,8-15 | INV. H04L9/40 H04L9/00 |
| A | * figure 1 * * paragraph [0007] - paragraph [0008] * * paragraph [0016] * * paragraph [0031] - paragraph [0033] * * paragraph [0037] * ----- | 6,7 | H04L9/08 |
| A | EP 3 582 434 A1 (NXP BV [NL]) 18 December 2019 (2019-12-18) * figure 1 * * paragraph [0027] * * paragraph [0030] - paragraph [0031] * ----- | 1-15 | |
| A | D'anvers Jan-Pieter ET AL: "Design and Security Analysis of Lattice-based Post-Quantum Encryption", , 1 May 2021 (2021-05-01), XP093200830, Retrieved from the Internet: URL:https://lirias.kuleuven.be/retrieve/620219 * Section 2.2.4. * * Section 4.5. * * Section 6.2.1. * ----- | 1-15 | **TECHNICAL FIELDS SEARCHED (IPC)** H04L |

The present search report has been drawn up for all claims

| Place of search | Date of completion of the search | Examiner |
|---|---|---|
| Munich | 7 April 2025 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0217

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | | Publication date | Patent family member(s) | | Publication date |
|---|---|---|---|---|---|
| EP 4436092 | A1 | 25-09-2024 | EP | 4436092 A1 | 25-09-2024 |
| | | | WO | 2024193906 A1 | 26-09-2024 |
| EP 3582434 | A1 | 18-12-2019 | CN | 110598484 A | 20-12-2019 |
| | | | EP | 3582434 A1 | 18-12-2019 |
| | | | US | 10305479 B1 | 28-05-2019 |

EPO FORM P0459

For more details about this annex : see Official Journal of the European Patent Office, No. 12/82